# EUROPÄISCHE PATENTANMELDUNG

(11) **EP 3 057 191 A1**
(43) Veröffentlichungstag der Anmeldung: **17.08.2016**
(21) Anmeldenummer: 15154975.5
(22) Anmeldetag: 13.02.2015
(51) Int. Cl.: H02J 3/30, F16F 15/305, H02K 1/27, H02K 21/22, H02K 7/02

(54) **Außenläufer-Permanentmagnet Motor**

(71) Anmelder: Enrichment Technology Company Ltd. Zweigniederlassung Deutschland, 52428 Jülich (DE)
(72) Erfinder: Bäumer, Thomas, 41836 Hückelhoven (DE)
(74) Vertreter: Jostarndt Patentanwalts-AG

(57) **Zusammenfassung**

Die Erfindung betrifft eine Magneteinheit (3) geeignet als Außenläufer für eine Motor-Generator-Einheit (1) für Schwungräder (10) mit hohen Betriebs-Umdrehungsgeschwindigkeiten umfassend einen ersten dehnfähigen ringförmigen Verstärkungsring (31) mit einer Innenseite (31 i), auf der eine Vielzahl an zumindest magnetisierbaren ersten Körpern (4) im Kontakt zur Innenseite (31 i) und eine Vielzahl an zumindest magnetisierbaren zweiten Körpern (4') so angeordnet sind, dass eine Dehnung des Verstärkungsrings (31) mittels eines oder mehrerer der zwischen den ersten Körpern (4) angeordneten zweiten Körpern (4') mit einer zur Dehnung des Verstärkungsrings (31) geeigneten Form der zweiten Körper (4') bewirkt wird und eine aus der Dehnung des Verstärkungsrings (31) resultierende Druckvorspannung (DV) zwischen ersten und zweiten Körper (4, 4') in umlaufender Richtung (U) zur Innenseite (31 i) besteht, die so angepasst ist, dass diese ein Reißen der ersten und zweiten Körper (4, 4') aufgrund einer bei Betriebs-Umdrehungsgeschwindigkeit des Schwungrades (10) wirkenden Fliehkraft verhindern kann. Die Erfindung betrifft des Weiteren eine Schwungradeinheit (11) mit einer solchen Magneteinheit (3) sowie Verfahren zur Herstellung der Magneteinheit (3) und der Schwungradeinheit (11).

## Beschreibung

### Gebiet der Erfindung

Die Erfindung bezieht sich auf eine Magneteinheit als Außenläufer für eine Motor-Generator-Einheit für Schwungräder, auf eine Schwungradeinheit mit einer solchen Magneteinheit in der Motor-Generator-Einheit und auf Verfahren zur Herstellen einer solchen Magneteinheit und einer solchen Schwungradeinheit.

### Hintergrund der Erfindung

Schwungrad-Energiespeicher benötigen eine Motor-Generator-Einheit einerseits mit einem Motor, um den Schwungradkörper (Rotor) zur Aufnahme von Energie zu beschleunigen, und andererseits mit einem Generator, um die gespeicherte Rotationsenergie wieder abgeben zu können, wobei der Schwungradkörper abgebremst wird. Die Energie wird dabei vorzugsweise durch den Generator in Form von elektrischer Energie abgegeben. In den industriellen Anwendungen wird dabei typischerweise ein Permanent-Magnet (PM) Motor eingesetzt, der gleichzeitig auch als Generator arbeiten kann. Vorteilhaft ist bei diesem Prinzip der hohe Wirkungsgrad des PM-Motor/Generators und die sehr kurze Ansprechzeit, mit der Energie vom Schwungradkörper aufgenommen oder wieder abgegeben werden kann.

Solche Motoren gibt es in vielen Anwendungen als Innenläufer, bei dem sich die Magnete auf der Rotorwelle befinden. Hierbei sind die Magnete als Ringmagnet oder als Magnetsegment außen auf der Rotorwelle montiert, beispielsweise geklebt und armiert, damit die Magnete bei der Rotordrehzahl nicht reißen oder sich von der Rotorwelle ablösen. Der magnetische Spalt zwischen Rotor und Stator wird durch die außen auf dem Magneten aufliegende Armierung entsprechend groß, was die Motor/Generator-leistung und den Wirkungsgrad begrenzt. Für Anwendungen mit hohem Wirkungsgrad und Leistungen bei hohen Drehzahlen werden dagegen Magnete als Außenläufer angeordnet. Dabei befinden sich die Magnete am Innendurchmesser des rotierenden Teils des Motor-Generator-Einheit, wobei sich der Stator im Zentrum des rotierenden Teils der Motor-Generator-Einheit befindet. Damit können höhere Drehmomente und Wirkungsgrade mit der Motor-Generator-Einheit erreicht werden. Der magnetische Spalt zwischen Rotor und Stator kann in Innenläufern minimal ausgeführt werden, weil sich keine störende Bandage oder Armierung zwischen Magneten und Stator befindet.

Bei großen Abmessungen des rotierenden Motorteils, wie beispielsweise bei Schwungräder zur Energiespeicherung der Fall, sind die Kräfte, die auf die Magneten aufgrund der Rotation wirken, entsprechend groß. Gerade bei Umdrehungsgeschwindigkeiten mit Drehzahlen von 50000 Umdrehungen pro Minute steigen die Spannungen und Dehnungen auf die Magnete stark an. Bei diesen Drehzahlen sind die verfügbaren Magnete nicht stabil genug, um einen kontinuierlichen Langzeitbetrieb standzuhalten. Stattdessen reißen die Magnete und verlieren damit allmählich ihre magnetischen Eigenschaften, wodurch zunächst der Wirkungsgrad der Motor-Generator-Einheit sinkt und diese am Ende gänzlich versagt.

### Zusammenfassung der Erfindung

Es ist eine Aufgabe der vorliegenden Erfindung, eine unter hohen Rotationsgeschwindigkeiten langzeitig belastbare Magneteinheit für eine Motor-Generator-Einheit mit hohem Wirkungsgrad für entsprechende Schwungradanwendungen zur Verfügung zu stellen.

Diese Aufgabe wird gelöst durch eine Magneteinheit geeignet als Außenläufer für eine Motor-Generator-Einheit für Schwungräder mit hohen Betriebs-Umdrehungsgeschwindigkeiten umfassend einen ersten dehnfähigen ringförmigen Verstärkungsring mit einer Innenseite, auf der eine Vielzahl an zumindest magnetisierbaren ersten Körpern im Kontakt zur Innenseite und eine Vielzahl an zumindest magnetisierbaren zweiten Körpern so angeordnet sind, dass eine Dehnung des Verstärkungsrings mittels eines oder mehrerer der zwischen den ersten Körpern angeordneten zweiten Körpern mit einer zur Dehnung des Verstärkungsrings geeigneten Form der zweiten Körper bewirkt wird und eine aus der Dehnung des Verstärkungsrings resultierende Druckvorspannung zwischen ersten und zweiten Körper in umlaufender Richtung zur Innenseite besteht, die so angepasst ist, dass diese ein Reißen der ersten und zweiten Körper aufgrund einer bei Betriebs-Umdrehungsgeschwindigkeit des Schwungrades wirkenden Fliehkraft verhindern kann.

Der Verstärkungsring kann hierbei beispielsweise aus einem Faserverbundwerkstoff, beispielsweise ein CFK-Material, hergestellt sein. Ein Verstärkungsring aus einem solchen Material kann mit hoher Festigkeit dünnwandig hergestellt werden, beispielsweis mit einer Wanddicke von nur 3mm, so dass er aufgrund von Spreizkräften bei der Montage der ersten und zweiten Körper aufgedehnt werden kann, dieser Verstärkungsring aufgrund seiner Festigkeit aber einen permanenten Druck auf die ersten und zweiten Körper ausübt, so dass zwischen diesen eine hohe Druckvorspannung in umlaufender Richtung zur Innenseite des Verstärkungsrings besteht. Die Form der ersten und zweiten Körper kann je nach Ausführungsform des Verstärkungsrings geeignet gewählt sein, sofern die Form es ermöglicht, dass die ersten und zweiten Körper in ihrer endgültigen Position die gewünschte Druckvorspannung aufeinander ausüben, ohne dass sich die ersten und zweiten Körper dabei gegenseitig aus ihren vorgesehenen Positionen schieben. Bevorzugt sind daher Formen der ersten und zweiten Körper, die in der endgültigen Position der ersten und zweiten Körper auf dem Verstärkungsring aneinander anliegende Seitenflächen umfassen, deren Reibung größer ist als die in radialer Richtung aufgrund der Vorspannung wirkenden Scherkräfte sind. Die Scherkraft bezeichnet hier die aufgrund der Druckvorspannung in radialer Richtung zum Mittelpunkt des ringförmigen Verstärkungsrings auf die zweiten Körper wirkende Kraft. Auf die ersten Körper wirkt eine entsprechende Kraft in umgekehrte Richtung (in Richtung der Innenfläche des Verstärkungsrings). Dazu können die ersten und zweiten Körper beispielsweise eine die Reibung erhöhende Rauheit besitzen, eine Adhäsionsschicht zwischen den ersten und zweiten Körper angebracht sein oder die Formen so angepasst sein, dass die aneinander anliegenden Flächen möglichst groß sind oder eine entsprechend günstige Ausrichtung zur Verringerung der Scherkräfte aufweisen. Der zweite Körper kann dabei einteilig ausgeführt sein oder mehrere Subkörper umfassen, die zusammen den zweiten Körper bilden. Gleiches gilt auch für den ersten Körper.

Da die Schwungräder eher groß sind, werden für die Magneteinheit als Teil der Motor-Stator-Einheit keine Ringmagnete, sondern einzelne magnetisierbare Körper angeordnete als resultierender Ring oder als Segment verwendet. Dabei ist es unerheblich, ob die Magneteinheit mit einer konventionellen Magnetisierung (2 - x-polig) aufgebaut wird oder eine sogenannte Halbach-Anordnung gewählt wird. Hierbei unterscheidet sich nur die Magnetisierungs-Vorzugsrichtung der einzelnen magnetisierbaren oder bereits magnetisierten ersten und zweiten Körper, für die Belastung der Magneteinheit und der Rotorkomponente ist die Magnetisierungsrichtung der einzelnen ersten und zweiten Körper nicht erheblich. Als erste und zweite Körper können neben später magnetisierten Körpern auch bereits magnetisierte Permanentmagnete verwendet werden.

Die Druckvorspannung zwischen den ersten und zweiten Körpern darf dabei eine vom jeweiligen Material abhängige maximale Druckvorspannung nicht übersteigen, da sonst die ersten und/oder zweiten Körper bei ihrer Anordnung auf dem ersten Verstärkungsring geschädigt oder gar zerstört werden. Hierzu kann beispielsweise der innere Durchmesser des Verstärkungsrings sowie dessen Dicke an die gewünschte Dehnfähigkeit des Verstärkungsrings je nach verwendetem Material sowie die Form der ersten und zweiten Körper an deren Belastbarkeit zur Erzeugung einer geeigneten Druckvorspannung angepasst werden.

Bei Schwungräder zur Energiespeicherung mit großen Abmessungen des rotierenden Motorteils kann die erfindungsgemäße Magneteinheit aufgrund der entsprechend angepassten Vorspannung selbst die Kräfte, die auf die ersten und zweiten Körper bei sehr hohen Drehzahlen von 50000 Umdrehungen pro Minute wirken, kompensieren, ohne dass die Magneteinheit ihre vorteilhaften Eigenschaften verliert. Eine spaltvergrößernde Bandage auf der Innenseiten der Magneteinheit zur Stabilisierung der ersten und zweiten Körper gegen ein Zerreißen wird nicht benötigt, so dass der Spalt zwischen Magneteinheit und Stator für einen guten Wirkungsgrad klein gehalten werden kann. Eine solche Motor-Generator-Einheit stellt somit eine unter hohen Rotationsgeschwindigkeiten langzeitig belastbare Motor-Generator-Einheit mit hohem Wirkungsgrad für entsprechende Schwungradanwendungen zur Verfügung dar.

In Kontakt zur Innenseite bezeichnet ein Anliegen der ersten Körper an der Innenseite des Verstärkungsrings. Hierbei kann der erste Körper stellenweise oder vollständig an die Innenseite anliegen. Die ersten und zweiten Körper sind zumindest magnetisierbar. Dieser Begriff schließt mit ein, dass die ersten und/oder zweiten Körper Permanentmagnete sein können oder zur Ausübung eines permanenten Magnetfeldes im späteren Betrieb der Motor-Generator-Einheit magnetisierbar sind. Die Anordnung der ersten und zweiten Körper auf dem Verstärkungsring schließt mit ein, dass in manchen Ausführungsformen zusätzlich an manchen geeigneten Stellung weitere Körper benachbart zu den ersten und/oder zweiten Körpern angeordnet sein können. In einer Ausführungsform sind benachbarte erste und zweite Körper zumindest segmentweise in direktem Kontakt zueinander auf der Innenseite angeordnet sind. Der Begriff "in Kontakt zueinander" bezeichnet den Zustand, dass die benachbarten ersten und zweiten Körper einen Druck aufeinander ausüben. Dies schließt die Möglichkeit mit ein, dass zwischen den benachbarten Permanentmagneten eine Zwischenschicht angeordnet sein kann, über die der Druck auf die benachbarten Permanentmagnete vermittelt wird. Der Begriff "segmentweise" umfasst auch Anordnungen, in denen zwischen den Segmenten aus ersten und zweiten Körpern ein oder mehrere weitere Körper angeordnet sein können, so dass diese Anordnung zwar die Innenseiten des Verstärkungsrings vollständig umlaufen können, allerdings die ersten und zweiten Körper nur in Segmenten dieser umlaufenden Anordnung angeordnet sind. Hierbei können die Abstände zwischen den Segmenten aus ersten und zweiten Körpern je nach gewünschter Magnetisierung der ersten und zweiten Körper unterschiedlich gestaltet sein, beispielsweise können die Abstände kleiner der mittleren Länge der ersten oder zweiten Körper in umlaufender Richtung um die Innenseite des ersten Verstärkungsrings sein.

In einer Ausführungsform besitzen die ersten und zweiten Körper jeweils eine Grundfläche mit einer langen Grundseite in umlaufender Richtung der Innenseite gesehen und eine Deckelfläche mit einer kurzen Grundseiten in umlaufender Richtung der Innenseite gesehen, wobei die ersten Körper und die zweiten Körper mit einer gegenteiligen Ausrichtung so nebeneinander angeordnet sind, dass jeweils die Grundfläche des ersten Körpers und die Deckelfläche des benachbarten zweiten Körpers der Innenseite des Verstärkungsring zugewandt sind. Dadurch können die Seitenflächen der ersten und zweiten Körper zur Kompensation der zwischen den Körpern wirkenden Schwerkräfte aneinander zumindest teilweise anliegen und weisen eine günstige Ausrichtung zur Verringerung der Scherkräfte auf. Dadurch bleiben die in Kontakt zu der Innenseite angeordneten ersten und zweiten Körper in umlaufender (tangentialer) Richtung zueinander mit einem entsprechenden umlaufenden (tangentialen) Druck auf die jeweils benachbarten Permanentmagnete vorgespannt. In einer Ausführungsform sind dazu die Längen der kurzen und langen Grundseiten der jeweiligen ersten und zweiten Körper auf die gewünschte Druckvorspannung angepasst. Hierbei ist die Summe der jeweiligen langen und kurzen Seiten entlang eines Umlaufs länger als der Umfang der Innenseite des Verstärkungsrings, wobei der Längenüberschuss im Verhältnis zur Dehnfähigkeit des Verstärkungsrings die gewünschte Druckvorspannung ergibt.

In einer weiteren Ausführungsform sind die ersten und zweiten Körper jeweils als Pyramidenstümpfe mit viereckiger Grundfläche mit zwei gegenüberliegenden trapezförmigen Stirnflächen ausgerichtet im Wesentlichen senkrecht auf der Grundfläche ausgeführt, wobei die Trapezform der Stirnflächen die kurze Grundseite und die lange Grundseite als parallele Grundseiten der Trapezform umfasst. In einer bevorzugten Ausführungsform ist die Grundfläche dabei rechteckig und die Stirnflächen sind gleichschenklige Trapeze. Der Pyramidenstumpf besitzt eine zur Grundfläche parallele Deckelfläche mit kleinerem Flächeninhalt als die Grundfläche. Grundfläche und Deckelfläche werden durch die trapezförmigen Stirnflächen auf den jeweils gegenüberliegenden Seiten miteinander verbunden. Die anderen gegenüberliegenden beiden Seitenflächen sind ebenfalls durch die im Wesentlichen senkrechte Ausrichtung der trapezförmigen Stirnflächen auf der Grundfläche im Wesentlichen Rechtecke. Die Seitenlängen der Grundfläche und der Deckelfläche senkrecht zu den trapezförmigen Stirnflächen sind im Wesentlichen gleich. Der Begriff im Wesentlichen schließt neben dem Pyramidenstumpf, bei dem die Grundfläche und die Deckelfläche exakt parallel zueinander angeordnet sind und wo die angrenzenden Flächen exakt rechteckig sind und die trapezförmigen Stirnflächen exakt senkrecht zur Grundfläche ausgerichtet sind, auch die Körper mit ein, wo die Anordnungen um bis zu 5° von den mathematisch exakten Angaben wie senkrecht und/oder rechteckig abweichen, aber dennoch bei entsprechenden ersten und zweiten Körpern geformt als solche Pyramidenstümpfe die benachbarten gegenteilig ausgerichteten ersten und zweiten Körper eine Druckvorspannung bei sicher in ihrer Position verbleibenden ersten und zweiten Körpern zueinander aufbauen können. Die trapezförmigen Stirnflächen bezeichnen dabei normale Trapeze unter Ausschluss überschlagener oder verschränkter Trapeze. Die Bezeichnung "Grundseiten" in Bezug auf die trapezförmigen Stirnflächen bezeichnet die parallel zueinander ausgerichteten Kanten des Trapezes.

In einer Ausführungsform sind die Stirnflächen der ersten und/oder zweiten Körper senkrecht zur Rotationsachse des Schwungrades ausgerichtet. Somit können die ersten und/oder zweiten Körper in Kontakt zueinander in umlaufender Richtung senkrecht zur Rotationsachse angeordnet werden, so dass die Vorspannung die Dehnung des Verstärkungsrings aufgrund der Fliehkräfte ideal kompensieren kann.

In einer weiteren Ausführungsform sind die Grundfläche rechteckig und die Stirnflächen der Permanentmagnete gleichschenklige Trapeze. Damit lassen sich die ersten und zweiten Körper einfach in gegenläufigen Ausrichtungen zueinander anordnen. In einer bevorzugten Ausführungsform sind die beiden Stirnfläche eines jeden ersten und/oder zweiten Körpers identisch. Damit können die ersten und/oder zweiten Körper noch einfacher auf dem Verstärkungsring angeordnet werden, da sie für die Montage in ihrer Montagerichtung nicht unterschieden werden müssen und unabhängig von der Orientierung die gleichen Vorspannungen erzeugen.

In einer weiteren Ausführungsform weisen die Stirnflächen der zweiten Körper mit der kurzen Grundseite zugewandt zur Innenseite des Verstärkungsrings einen ersten Winkel zwischen Trapezschenkel und langer Grundseite der Stirnfläche und die Stirnflächen der ersten Körper mit der langen Grundseite zugewandt zur Innenseite des Verstärkungsrings einen zweiten Winkel zwischen Trapezschenkel und langer Grundseite der Stirnfläche auf, wobei sich die ersten und zweiten Winkel unterscheiden. Damit müssen die zweiten Körper gegen die Seitenflächen der benachbarten ersten Körper zur Montage gepresst werden, was vorteilhaft für die resultierende Druckvorspannung ist. In einer bevorzugten Ausführungsform ist dazu der zweite Winkel größer als der erste Winkel. In einer besonders vorteilhaften Ausführungsform beträgt der zweite Winkel 76,5 Grad ± 2 Grad und der erste Winkel 82,5 Grad ± 2 Grad. Derart gestaltete erste und zweite Körper lassen sich besonders präzise und unter präzis eingestellter großer Vorspannung erfindungsgemäß montieren. Der Winkel zwischen den benachbarten ersten und zweiten Körpern ist damit groß genug, dass es zwischen den fertig positionierten ersten und zweiten Körpern zu einem selbsthemmenden besonders sicheren Verbleib auf den gewünschten Positionen kommt.

In einer weiteren Ausführungsform sind die ersten und zweiten Körper als magnetischer Ring, der die Innenseite des Verstärkungsrings vollständig umläuft, angeordnet. In einer Ringanordnung weisen alle ersten und zweiten Körper die gleiche Druckvorspannung auf, da jeder dieser Körper auf beiden Seiten im Gegensatz zu einer segmentartigen Anordnung einen Nachbar-Körper besitzt.

In einer weiteren Ausführungsform weisen die in Umlaufrichtung der Magneteinheit nebeneinander angeordneten ersten und zweiten Körper eine Magnetisierung gemäß einer Halbach-Anordnung auf. In einer Halbach-Anordnung hebt sich der magnetische Fluss zur Innenseite des Verstärkungsrings fast auf während dieser zu der dem späteren Stator zugewandten Seite jedoch verstärkt. Dadurch kann ein größerer Wirkungsgrad der späteren Motor-Generator-Einheit erzielt werden.

In einer weiteren Ausführungsform ist zumindest zwischen einigen der benachbarten ersten und zweiten Körper eine zumindest temporär gleitfähige Adhäsionsschicht angeordnet. Dies minimiert die auftretenden Kräfte beim Verpressen der ersten und zweiten Körper auf- und gegeneinander, da die Adhäsionsschicht zunächst die Reibung der jeweiligen ersten und zweiten Körper aneinander vermindert und andererseits die spätere Haftung der ersten und zweiten Körper aneinander im Verstärkungsring verbessert. Somit lässt sich der Herstellungsprozess leichter ausführen.

In einer weiteren Ausführungsform umfasst die Magneteinheit mindestens einen weiteren zweiten Verstärkungsring angeordnet auf der vom Stator abgewandten Seite des ersten Verstärkungsrings. Dadurch lässt sich die Druckvorspannung noch weiter erhöhen, indem der zweite Verstärkungsring mit einem etwas kleiner Innendurchmesser als der Außendurchmesser des ersten Verstärkungsrings auf den ersten Verstärkungsring nach Montage der ersten und zweiten Körper aufgepresst wird. Da der erste Verstärkungsring für sich allein durch die Radialkräfte im Betrieb des Schwungrades stark belastet wird, kann dagegen der aufgepresste zweite Verstärkungsring, der nicht aufgedehnt werden muss und somit eine größere Wanddicke als der erste Verstärkungsring besitzen kann, die Radialkräfte durch die Rotation der ersten und zweiten Körper bei der Nenndrehzahl des Schwungrades leicht kompensieren. Somit wird durch den zweiten Verstärkungsring der sichere Halt der ersten und zweiten Körper im Betrieb weiter verbessert. Der zweite Verstärkungsring kann ebenfalls wie der erste Verstärkungsring aus einem Faserverbundwerkstoff bestehen, beispielsweise ein CFK-Material.

In einer weiteren Ausführungsform umfasst die Magneteinheit in jeweiliger axialer Richtung aus der Innenfläche des ersten Verstärkungsrings herausragende Vorsprünge. Diese Vorsprünge halten die ersten und zweiten Körper in ihren axialen Positionen auf dem ersten Verstärkungsring.

Die Erfindung betrifft des Weiteren eine Schwungradeinheit umfassend ein zumindest teilweise innen hohles Schwungrad mit einer Innenseite und eine am Schwungrad angeordnete erfindungsgemäße Magneteinheit, die zusammen mit einem Stator eine Motor-Generator-Einheit zum Rotieren des Schwungrades bildet, wobei die Magneteinheit auf der Innenseite des Schwungrades so montiert ist, dass die ersten und zweiten Körper im Betrieb des Schwungrades den Stator umlaufen.

Die Erfindung betrifft des Weiteren ein Verfahren zur Herstellung einer erfindungsgemäßen Magneteinheit geeignet als Außenläufer für eine Motor-Generator-Einheit für Schwungräder mit hohen Betriebs-Umdrehungsgeschwindigkeiten umfassend die Schritte
- Bereitstellen eines zur Erzeugung einer gewünschten Druckvorspannung dehnfähigen ersten Verstärkungsringes mit einer Innenseite, auf der einer Vielzahl an zumindest magnetisierbaren ersten Körpern im Kontakt zur Innenseite angeordnet sind;
- Positionieren von zweiten Körpern zwischen den ersten Körpern so, dass die zweiten Körper in radialer Richtung aus dem ersten Körpern herausragen und dass zwischen zweiten Körpern und der Innenseite des Verstärkungsrings eine Lücke verbleibt, wobei die zweiten Körper eine geeignete Form zur Dehnung des Verstärkungsrings aufweisen;
- Hineindrücken der herausstehenden zweiten Körper mittels eines Spreizwerkzeugs in Richtung der Innenseite des Verstärkungsrings, bis eine Dehnung des ersten Verstärkungsrings bewirkt wird und eine daraus resultierende Druckvorspannung zwischen ersten und zweiten Körpern in umlaufender Richtung zur Innenseite ausgeübt wird, die so angepasst ist, dass diese ein Reißen der ersten und zweiten Körper aufgrund einer bei Betriebs-Umdrehungsgeschwindigkeit des Schwungrades wirkenden Fliehkraft verhindert.

Das Positionieren kann dabei so durchgeführt werden, dass zwischen alle benachbarten ersten Körper ein zweiter Körper positioniert wird oder dass zumindest in einem Segment aus mehreren ersten Körpern jeweils zweite Körper in diesem Segment positioniert werden. Der zweite Körper kann dabei einteilig ausgeführt sein oder mehrere Subkörper umfassen, die zusammen den zweiten Körper bilden. Die Lücke kann dabei mit einem herkömmlichen Spreizwerkzeug geschlossen werden. Der Fachmann ist in der Lage, ein geeignetes Spreizwerkzeug auszuwählen und gegebenenfalls auf die Dimensionen des Verstärkungsrings und der Permanentmagneten anzupassen.

In einer Ausführungsform des Verfahrens umfasst der Schritt des Positionierens den Schritt eines Aufbringens einer zumindest bis Abschluss des Hereindrückens gleitfähigen Adhäsionsschicht zwischen den ersten und zweiten Körpern.

In einer weiteren Ausführungsform umfasst das Verfahren den weiteren Schritt eines Aufpressens eines zweiten Verstärkungsringes auf die Außenseite des ersten Verstärkungsrings zur Verstärkung der Druckvorspannung, wozu der zweite Verstärkungsring einen kleineren Innendurchmesser besitzt als der Außendurchmesser des ersten Verstärkungsrings beträgt, wobei die Differenz dieser Durchmesser auf die gewünschte Druckvorspannung angepasst ist.

Hiermit lässt sich die Druckvorspannung der Permanente weiter verstärken, was eine Anwendung der Motor-Generator-Einheit für noch höhere Drehzahlen des Schwungrades ermöglicht. Die Permanentmagnete müssen hierbei zuerst auf dem ersten Verstärkungsring mit einer geeigneten Dehnfähigkeit positioniert werden, damit die durch das Spreizwerkzeug auf die Permanentmagnete ausgeübten Druckkräfte diese Magnete nicht schädigen. Erst nach erfolgten Positionierung der Permanentmagnete und Schließen der Lücke zur Innenseite des ersten Verstärkungsrings kann der zweite Verstärkungsring auf den ersten Verstärkungsring aufgepresst werden. Erst nach dem Aufpressen des zweiten Verstärkungsring wird die in dieser Konfiguration gewünschte Druckvorspannung der Permanentmagnete erreicht. Die so komplettierte Einheit kann in den Schwungrad-Energiespeicher eingebaut werden.

In einer Ausführungsform umfasst das Verfahren den weiteren Schritt des Magnetisierens der ersten und/oder zweiten Körper nach dem Schritt des Hereindrückens, vorzugsweise wird durch die Magnetisierung eine Halbach-Anordnung erzeugt. Durch die nachträgliche Magnetisierung der ersten und/oder zweiten Körper wirken keine oder verminderte Abstoßungskräfte zwischen den ersten und/oder zweiten Körpern, was die Positionierung der ersten und zweiten Körper auf dem ersten Verstärkungsring vereinfacht.

Die Erfindung betrifft des Weiteren ein Verfahren zur Herstellung einer erfindungsgemäßen Schwungradeinheit umfassend den Schritt des Montierens einer erfindungsgemäßen Magneteinheit auf der Innenseite eines zumindest teilweise innen hohlen Schwungrades zur Bildung einer Motor-Generator-Einheit zusammen mit einem Stator, so dass die Magneteinheit mit den ersten und zweiten Körpern im Betrieb des Schwungrades den Stator der Motor-Generator-Einheit als Außenläufers umläuft.

### Kurze Beschreibung der Abbildungen

Diese und andere Aspekte der Erfindung werden im Detail in den Abbildungen wie folgt gezeigt:
- Fig.1:: ein Ausführungsbeispiel einer Schwungradeinheit mit montierter Motor-Generator-Einheit mit erfindungsgemäßer Magneteinheit im seitlichen Schnitt entlang der Rotationsachse;
- Fig.2:: eine Form der erfindungsgemäßen ersten und zweiten Körper in perspektivischer Ansicht;
- Fig.3:: ein Ausschnitt von auf der Innenseite des ersten Verstärkungsrings positionierten ersten und zweiten Körpern von dem Schließen der Lücke durch ein Spreizwerkzeug;
- Fig.4:: derselbe Ausschnitt wie in Figur 3 nach Schließen der Lücke zwischen den zweiten Körpern und der Innensete des ersten Verstärkungsrings;
- Fig.5:: ein anderes Ausführungsbeispiel einer Motor-Generator-Einheit mit der erfindungsgemäßen Magneteinheit als Schnitt durch senkrecht zur Rotationsachse der späteren Schwungradeinheit;
- Fig.6:: ein Ausführungsbeispiel des erfindungsgemäßen Verfahrens.

### Detaillierte Beschreibung der Ausführungsbeispiele

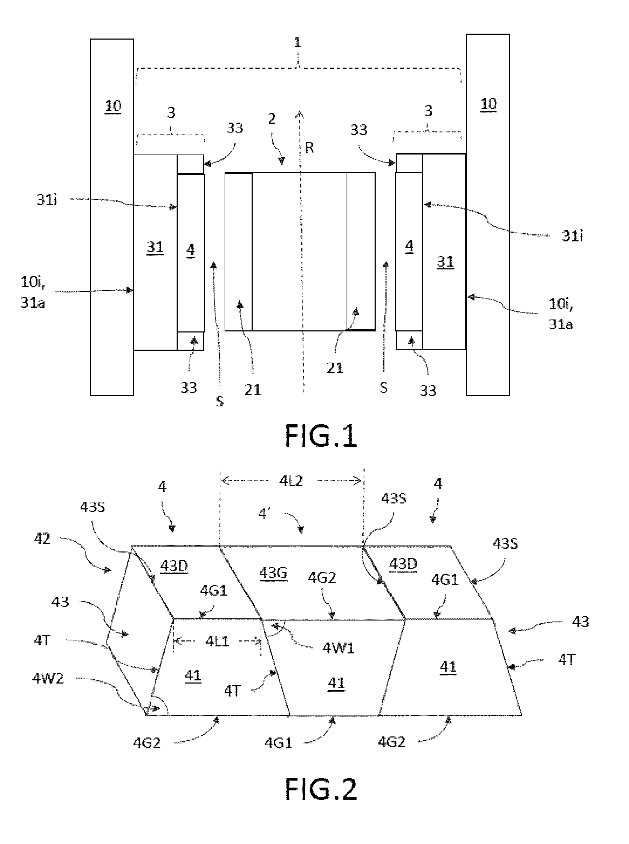

Fig.1 zeigt ein Ausführungsbeispiel einer Schwungradeinheit mit Schwungrad 10 mit montierter Motor-Generator-Einheit 1 der der erfindungsgemäßen Magneteinheit 3 im seitlichen Schnitt entlang der Rotationsachse R des zylinderförmigen und innen hohlen Schwungrades 10. Die Motor-Generator-Einheit 1 umfasst einen Stator 2 mit elektromagnetischen Spulen 21 und eine den Stator umlaufende erfindungsgemäße Magneteinheit 3 umfassend einen ersten dehnfähigen ringförmigen Verstärkungsring 31, auf dem eine Vielzahl an ersten und zweiten Körpern 4, 4' (hier ist nur der erste Körper 4 gezeigt) zur Bereitstellung eines Außenläufers für die Motor-Generator-Einheit 1 angeordnet sind, wobei die Magneteinheit 3 in dieser Ausführungsform mit der Außenseite 31 a des Verstärkungsrings 31 auf der Innenseite 10i des Schwungrades 10 so montiert ist, dass die ersten und zweiten Körper 4, 4' im Betrieb des Schwungrades den Stator 2 umlaufen, wobei die einzelnen ersten und zweiten Körper 4, 4' zumindest segmentweise an der dem Stator 2 zugewandten Innenseite 31 i des Verstärkungsrings 31 der Magneteinheit 3 in Kontakt zueinander und in Kontakt mit der Innenseite 31 i angeordnet sind. Durch den seitlichen Schnitt ist hier jeweils nur der erste Körper 4 dargestellt. Die erfindungsgemäße Ausgestaltung und Anordnung der einzelnen ersten und zweiten Körper 4, 4' zueinander und zum Verstärkungsring 31 (entspricht dem ersten Verstärkungsring bei Ausführungsformen mit mehreren vorhandenen Verstärkungsringen) wird in den Figuren 2-4 näher erläutert. In der endgültigen Position der ersten und zweiten Körper 4, 4' sind alle Körper in umlaufender Richtung U in Kontakt zueinander und zur der Innenseite 31 i des Verstärkungsrings 31 angeordnete und üben somit aufeinander eine auf die Betriebs-Umdrehungsgeschwindigkeit des Schwungrades 10 angepasste Druckvorspannung DV aus. Da sich die ersten und zweiten Körper 4, 4' durch die Druckvorspannung DV in ihrer Position selbst stabilisieren, brauchen keine die ersten und zweiten Körper 4. 4' abdeckenden und stützenden Bandagen im Spalt S zwischen den ersten und zweiten Körpern 4, 4' und Stator 2 angeordnet werden, so dass die so erreichte minimale Breite des Spalts S eine Motor-Generator-Einheit mit höherer Leistung und besserem Wirkungsrad ermöglicht. Die Magneteinheit 3 umfasst in jeweiliger axialer Richtung außerdem aus der Innenfläche 31 i des ersten Verstärkungsrings 3 herausragende Vorsprünge 33, die die ersten und zweiten Körper 4, 4' in ihren axialen Positionen auf dem ersten Verstärkungsring 31 halten. Der (erste) Verstärkungsring 31 kann beispielsweise aus hochfestem CFK-Material umfassend ein Kohlenstoff-Fasermaterial mit hoher Zugfestigkeit eingebettet in ein dafür geeignetes Matrixmaterial gefertigt sein. Die Vorsprünge 33 können ebenfalls aus CFK-Material oder einem anderen Material, beispielsweise Metall gefertigt sein. Die ersten und zweiten Körper 4, 4' können aus einem für diese Anwendung typischen Material, beispielsweise NdFeB, gefertigt sein.

Fig.2 zeigt eine Ausführungsform nebeneinander angeordneter erfindungsgemäßer erster Körper 4 und zweiter Körper 4' in perspektivischer Ansicht. Aus Gründen der Übersichtlichkeit wurden alle weiteren Komponenten der Magneteinheit 3 hier weggelassen. Die ersten und zweiten Körper 4, 4' sind als in dieser Ausführungsform als Pyramidenstümpfe mit rechteckiger Grundfläche 43G mit zwei gegenüberliegenden gleichgeformten trapezförmigen Stirnflächen 41, 42 ausgerichtet im Wesentlichen senkrecht auf der Grundfläche 43G ausgeführt. Der Pyramidenstumpf 4 besitzt eine zur rechteckigen Grundfläche 43G parallele Deckelfläche 43D mit kleinerem Flächeninhalt als die Grundfläche 43G. Grundfläche 43G und Deckelfläche 43D werden durch die trapezförmigen Stirnflächen 41, 42 auf den jeweils gegenüberliegenden Seiten miteinander verbunden. Die anderen gegenüberliegenden beiden Seitenflächen 43 besitzen ebenfalls durch die im Wesentlichen senkrechte Ausrichtung der trapezförmigen Stirnflächen 41, 42 auf der Grundfläche 43G im Wesentlichen eine rechteckige Form. Die Länge der Seitenkante 43S der Grundfläche 43G und der Deckelfläche 43D senkrecht zu den trapezförmigen Stirnflächen 41, 42 sind im Wesentlichen gleich. Der Begriff im Wesentlichen schließt neben dem hier gezeigten Pyramidenstumpf als ersten beziehungsweise zweiten Körper 4, 4', bei dem die Grundfläche 43G und die Deckelfläche 43D exakt parallel zueinander angeordnet sind und wo die angrenzenden Seitenflächen 43 exakt rechteckig sind und die trapezförmigen Stirnflächen 41, 42 exakt senkrecht zur Grundfläche 43G ausgerichtet sind, auch die Körper mit ein, wo die Anordnungen um bis zu 5° von den mathematisch exakten Angaben wie senkrecht und/oder rechteckig abweichen, aber dennoch bei entsprechenden ersten Körpern 4 geformt als solche Pyramidenstümpfe die benachbarten gegenteilig ausgerichteten zweiten Körper 4' eine Druckvorspannung DV zueinander aufbauen können, die eine Fixierung der ersten und zweiten Körper 4, 4' an ihrer eingebauten Position sicherstellt, ohne dass die ersten und zweiten Körper 4, 4' im Betrieb des Schwungrades 10 reißen. Die Trapezform der Stirnflächen 41, 42 besitzt dabei zwei unterschiedlich lange parallel zueinander angeordnete Grundseiten 4G1, 4G2, eine kurze Grundseite 4G1 mit einer Länge 4L1 und eine lange Grundseite 4G2 mit der Länge 4L2. Die ersten und zweiten Körper 4, 4' sind in Einbauposition in der Motor-Generator-Einheit 1 so nebeneinander angeordnet, dass in umlaufender Richtung U der Innenseite 31 i gesehen wie in Fig.2 gezeigt abwechselnd jeweils die kurze Grundseite 4G1 und die lange Grundseite 4G2 nebeneinander angeordnet sind. Des Weiteren weisen die Stirnflächen 41, 42 der zweiten Körper 4' mit der kurzen Grundseite 4G1 zugewandt zur Innenseite 31 i des Verstärkungsrings 31 (hier der untere Rand) einen ersten Winkel 4W1 zwischen Trapezschenkel 4T und langer Grundseite 4G2 der Stirnfläche 41, 42 auf. Dagegen weisen die Stirnflächen 41, 42 der ersten Körper 4 mit der langen Grundseite 4G2 zugewandt zur Innenseite 31 i des Verstärkungsrings 31 (hier der untere Rand) einen zweiten Winkel 4W2 zwischen Trapezschenkel 4T und langer Grundseite 4G2 der Stirnfläche 41, 42 auf, wobei sich die ersten und zweiten Winkel 4W1, 4W2 sich so unterscheiden, dass der zweite Winkel 4W2 größer als der erste Winkel 4W1 ist, beispielsweise beträgt der zweite Winkel 4W2 76,5 Grad ± 2 Grad und der erste Winkel 4W1 82,5 Grad ± 2 Grad.

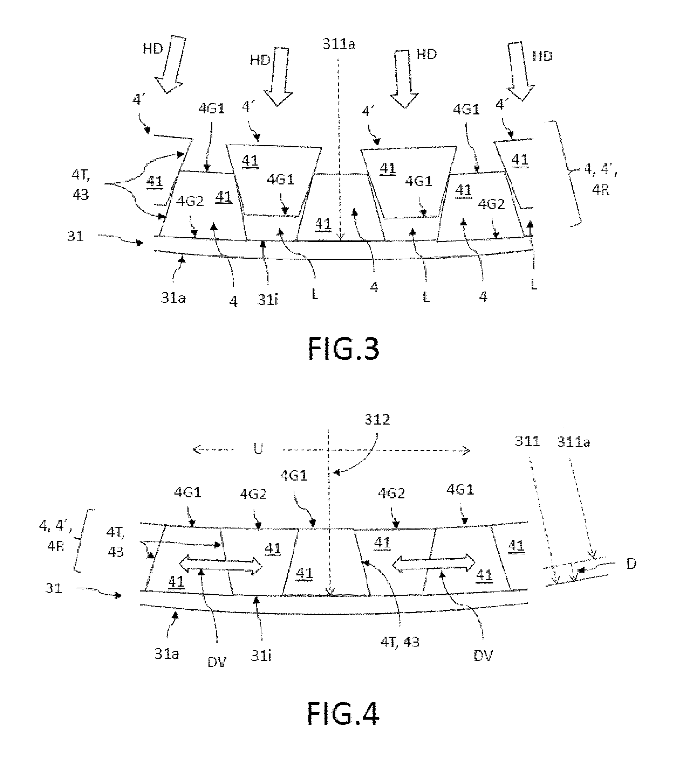

Fig.3 zeigt einen Ausschnitt von auf der Innenseite 31 i des ersten Verstärkungsrings 31 positionierten ersten Körper 4 vor dem Schließen der Lücke L durch Hereindrücken HD der zweiten Körper 4' mittels eines hier nicht gezeigten Spreizwerkzeugs. Hierbei sind die ersten und zweiten Körper 4, 4' als magnetischer Ring 4R, der die Innenseite 31 i des Verstärkungsrings 31 vollständig umläuft, angeordnet. Der erste Verstärkungsring 31 besitzt außerdem eine Außenseite 31 a. Aus Gründen der Übersichtlichkeit wurden alle weiteren Komponenten der Magneteinheit 3 hier weggelassen. Die ersten und zweiten Körper 4, 4' sind in Einbauposition in der Magneteinheit 3 so nebeneinander angeordnet, dass in umlaufender Richtung U der Innenseite 31 i gesehen abwechselnd jeweils die kurze Grundseite 4G1 und die lange Grundseite 4G2 der Innenseite 31 i des Verstärkungsrings 31 zugewandt sind und die Länge 4L1, 4L2 der Grundseiten 4G1, 4G2 der jeweiligen ersten und zweiten Körper 4, 4' so bemessen ist, dass alle auf der Innenseite 31 i des Verstärkungsrings 31 in Kontakt zu der Innenseite 31 i angeordneten ersten und zweiten Körper 4, 4' in umlaufender Richtung U zueinander eine auf die Betriebs-Umdrehungsgeschwindigkeit des Schwungrades 10 angepasste Druckvorspannung DV aufeinander ausüben können. Dazu müssen die so angeordneten ersten und zweiten Körper 4, 4' in Summe einen größeren Außenumfang besitzen als der Umfang des ersten Verstärkungsrings 31 im ungedehnten Zustand auf dessen Innenseite 31 i beträgt. Im ungedehnten Zustand hat der erste Verstärkungsring 31 einen Innendurchmesser 311 a. Der Außenumfang AU aller so angeordneten ersten und zweiten Körper ergibt sich bei einer Anzahl n an ersten und zweiten Körpern 4, 4' als AU = ½ * n * (4L1 + 4L2), da die Hälfte aller Körper mit der langen Grundseite 4G2 (erste Körper) und die andere Hälfte aller Körper mit der kurzen Grundseite 4G1 (zweite Körper) zur Innenseite 31 i des ersten Verstärkungsrings 31 positioniert sind. In dieser ersten in Figur 3 gezeigten Montageposition üben die ersten und zweiten Körper 4, 4' noch nicht die gewünschte Druckvorspannung aufeinander aus, da die zweiten Körper 4' mit der kurzen Grundseite 4G1 zur Innenseite 31 i des ersten Verstärkungsrings 31 noch herausstehen, so dass zwischen deren Grundfläche 43G und der Innenseite 31 i eine Lücke L besteht. In einer weiteren Ausführungsform kann zumindest zwischen einigen der ersten und zweiten Körper 4, 4' eine zumindest temporär gleitfähige Adhäsionsschicht 44 auf den Seitenflächen 43 angeordnet sein.

Fig.4 zeigt denselben Ausschnitt wie in Figur 3 nach Schließen der Lücke L zwischen den in Figur 3 noch herausstehenden zweiten Körper 4' und der Innensete 31 i des ersten Verstärkungsring 31 nach dem Hereindrücken HD der vormals herausstehenden zweiten Körper 4'. Die zwischen den benachbarten ersten und zweiten Körper 4, 4' wirkende Druckvorspannung DV wird dadurch erreicht, dass durch das Schließen der Lücke (entspricht dem Hereindrücken HD der vormals herausstehenden zweiten Körper 4' in die Positionen zwischen der bereits in Figur 3 in Kontakt mit der Innenfläche 31 i des ersten Verstärkungsrings 31 befindlichen ersten Körper 4) der erste Verstärkungsring 31 vor seinem ursprünglichen Innendurchmesser 311a auf seinen gedehnten Innendurchmesser 311 = 311 a + D aufgedehnt wird. Dadurch übt der so gedehnte erste Verstärkungsring 31 eine permanente Druckvorspannung DV auf die ersten und zweiten Körper 4, 4' aus, die sich in umlaufender Richtung parallel zur Innenseite 31 i des ersten Verstärkungsrings 31 durch den magnetischen Ring 4R aus den ersten und zweiten Körpern 4, 4'(und gegebenenfalls weitern im Ring angeordneten Körpern, hier nicht gezeigt) erstreckt. Über Wahl des Materials des ersten Verstärkungsrings 31 und der damit gegebenen Dehnfähigkeit, dessen Dicke und der geometrischen Abmasse der ersten und zweiten Körper lässt sich jede gewünschte Druckvorspannung zur Kompensation der Fliehkräfte im Betrieb der Schwungrad-Einheit einstellen. Gegebenenfalls lässt sich die gemäß Figur 4 gegebene Druckvorspannung noch durch Aufpressen eines zweiten Verstärkungsrings 32 von außen auf die Außenseite 31 a des ersten Verstärkungsrings 31 erhöhen.

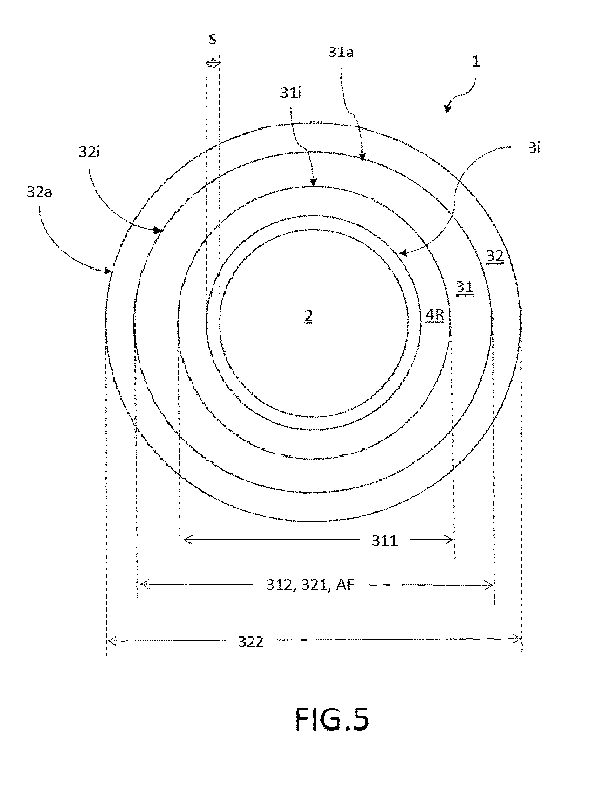

Fig.5 zeigt ein anderes Ausführungsbeispiel einer erfindungsgemäßen Magneteinheit 3 als Teil einer Motor-Generator-Einheit 1 als Schnitt durch senkrecht zur Rotationsachse R des späteren Schwungrades 10 mit einer solchen dann dort montierten Motor-Generator-Einheit 1. Hier ist im Zentrum des Schnittbildes der Stator 2 angeordnet (die elektromagnetischen Spulen 21 sind hier aus Übersichtsgründen nicht gezeigt), um den die umlaufende erfindungsgemäße Magneteinheit 3 angeordnet ist. Diese umfasst hier die ersten und zweiten Körper angeordnet als magnetischer Ring 4R sowie einen ersten und zweiten Verstärkungsring 31, 32. Zwischen dem magnetischen Ring 4R und dem Stator existiert ein minimaler Spalt S, der eine hoher Leistung und einen guten Wirkungsgrad der Motor-Generator-Einheit 1 ermöglicht. Die einzelnen ersten und zweiten Körper 4, 4' sind hier aus Übersichtsgründen nicht im Detail dargestellt. Der magnetische Ring 4R besitzt einen Innendurchmesser 3i und einen Außendurchmesser, der dem um eine Länge D gedehnten Innendurchmesser 311 des ersten Verstärkungsrings 31 entspricht. Der erste Verstärkungsring 31 hat entsprechend auch einen aufgedehnten Außendurchmesser 312. Auf der vom Stator 2 abgewandten Außenseite 31 a des ersten Verstärkungsrings 31 ist ein zweiter Verstärkungsring 32 angeordnet, der vorzugsweise auf den ersten Verstärkungsring 31 aufgepresst AP wurde. Für die Aufbringung des zweiten Verstärkungsrings kann in einer Ausführungsform auf der Außenseite 31 a des ersten Verstärkungsrings 31 und/oder auf der Innenseite 32i des zweiten Verstärkungsrings 32 eine hier nicht näher gezeigte Adhäsionsschicht als Gleitschicht aufgebracht AF sein, um den Aufpressvorgang AP zu erleichtern. Nach Positionierung des zweiten Verstärkungsrings 32 auf dem ersten Verstärkungsring 31 kann diese Adhäsionsschicht aushärten und damit die Verbindung zwischen erstem und zweitem Verstärkungsring 31, 32 verbessern. Die so fertiggestellte Magneteinheit 3 kann dann mit der Außenseite 32a des zweiten Verstärkungsrings auf der Innenseite 10i des Schwungrades montiert werden.

Beispielweise können dabei 144 Permanentmagnete als erste und zweite Körper mit den in den Figuren 3 - 5 gezeigten gegenläufigen Orientierungen (72 mit kurzer und 72 mit langer Grundseite 4G1, 4G2 zugewandt zur Innenseite 31 i des ersten Verstärkungsrings 31) als Magnetring 4R mit einem späteren Innendurchmesser von 230mm und einem späteren Außendurchmesser von 250mm, was einer Trapezhöhe der Permanentmagnete 4 von 20mm entspricht, auf einem ersten Verstärkungsring 31 mit einem ungedehnten Innendurchmesser 311 a von 249,2mm angeordnet werden. Hierbei können die Permanentmagnete erst nach einem Magnetisieren der magnetisierbaren ersten und zweiten Körper erzeugt werden. Nach dem Hereinpressen der 72 herausstehenden zweiten Körper 4' zwischen die anderen 72 ersten Körper 4 wird der erste Verstärkungsring 31 auf einen Innendurchmesser 311 von 250mm vorgegeben durch den Außendurchmesser des Magnetrings 4R gedehnt. Der gedehnte Außendurchmesser 312 des ersten Verstärkungsrings 31 beträgt beispielsweise 256mm. Auf diesen wird ein zweiter Verstärkungsring 32 mit einem Innendurchmesser 321 von beispielsweise 255,8mm und einem Außendurchmesser 322 von 310mm aufgepresst. Durch den vorgespannten ersten Verstärkungsring 31 wird der zweite Verstärkungsring 32 entsprechend gedehnt. Die erreichte Druckvorspannung DV der ersten und zweiten Körper 4, 4' aufeinander im magnetischen Ring 4R, die einer Dehnung D des ersten Verstärkungsrings 31 von 0,8mm entspricht, ist ausreichend, damit die ersten und zweiten Körper 4, 4' in der erfindungsgemäßen Magneteinheit 3 als Tel der Motor-Generator-Einheit 1 in einer Schwungrad-Einheit 11 mit einer Drehzahl von 45000 Umdrehungen pro Minute betrieben werden können, ohne dass dabei die ersten und zweiten Körper 4, 4' durch die Fliehkräfte reißen und so in ihrer magnetischen Wirkung nachlassen.

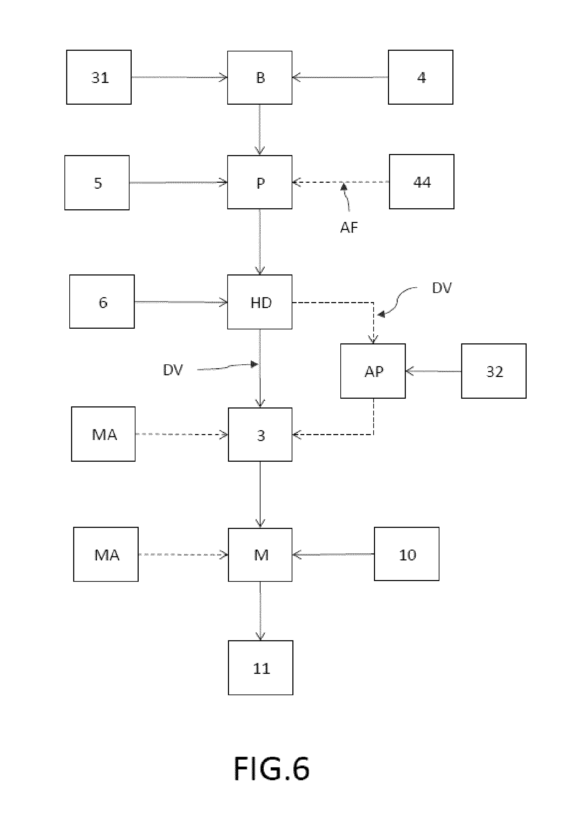

Fig.6 zeigt ein Ausführungsbeispiel des erfindungsgemäßen Verfahrens zur Bestückung eines zylinderförmigen zumindest teilweise innen hohlen Schwungrades 10 mit einer erfindungsgemäßen Magneteinheit 3 für hohe Betriebs-Umdrehungsgeschwindigkeiten umfassend die Schritte
- Bereitstellen B eines zur Erzeugung einer gewünschten Druckvorspannung DV dehnfähigen ersten Verstärkungsringes 31 mit einer Innenseite 31 i, auf der einer Vielzahl an zumindest magnetisierbaren ersten Körpern 4 im Kontakt zur Innenseite 31 i angeordnet sind;
- Positionieren P von zweiten Körpern 4' zwischen den ersten Körpern 4 so, dass die zweiten Körper 4' in radialer Richtung aus dem ersten Körpern 4 herausragen und dass zwischen zweiten Körpern 4' und der Innenseite 31 i des Verstärkungsrings 31 eine Lücke L verbleibt, wobei die zweiten Körper 4' eine geeignete Form zur Dehnung des Verstärkungsrings 31 aufweisen;
- optionales Aufbringens AF einer zumindest bis Abschluss des Hereindrückens HD gleitfähigen Adhäsionsschicht 44 zwischen den ersten und zweiten Körpern 4, 4';
- Hineindrücken HD der herausstehenden zweiten Körper 4' mittels eines Spreizwerkzeugs 6 in Richtung der Innenseite 31 i des Verstärkungsrings 31, bis eine Dehnung des ersten Verstärkungsrings 31 bewirkt wird und eine daraus resultierende Druckvorspannung DV zwischen ersten und zweiten Körpern 4, 4' in umlaufender Richtung U zur Innenseite 31 i ausgeübt wird, die so angepasst ist, dass diese ein Reißen der ersten und zweiten Körper 4, 4' aufgrund einer bei Betriebs-Umdrehungsgeschwindigkeit des Schwungrades 10 wirkenden Fliehkraft verhindert;
- optionales Aufpressens AP eines zweiten Verstärkungsringes 32 auf die Außenseite 31 a des ersten Verstärkungsrings 31 zur Verstärkung der Druckvorspannung DV, wozu der zweite Verstärkungsring 32 einen kleineren Innendurchmesser 321 besitzt als der Außendurchmesser 312 des ersten Verstärkungsrings 31 beträgt, wobei die Differenz dieser Durchmesser 312, 321 auf die gewünschte Druckvorspannung DV angepasst ist;
- Magnetisieren MA der ersten und/oder zweiten Körper 4, 4' nach dem Schritt des Hereindrückens HD, sofern als erste und zweite Körper 4. 4' keine bereits magnetisierten Permanentmagnete verwendet wurden.

Das Verfahren zur Herstellung der Magneteinheit kann zur Herstellung einer Schwungradeinheit 11, wie in Fig.6 gezeigt, fortgesetzt werden durch das
- Montieren M der Magneteinheit 3 auf der Innenseite 10i eines zumindest teilweise innen hohlen Schwungrades 10 zur Bildung einer Motor-Generator-Einheit 1 zusammen mit einem Stator 2, so dass die Magneteinheit 3 mit den ersten und zweiten Körpern 4, 4' im Betrieb des Schwungrades 10 den Stator 2 der Motor-Generator-Einheit 1 als Außenläufers umläuft.

Das Magnetisieren MA der ersten und/oder zweiten Körper 4, 4' kann optional auch erst nach dem Montieren M erfolgen, sofern als erste und zweite Körper 4. 4' keine bereits magnetisierten Permanentmagnete verwendet wurden.

Die hier gezeigten Ausführungsbeispiele stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: Motor-Generator-Einheit
- 2: Stator
- 21: elektromagnetische Spulen des Stators
- 3: Magneteinheit (rotiert um den Stator)
- 31: erster Verstärkungsring
- 31i: Innenseite des ersten Verstärkungsring
- 31a: Außenseite des ersten Verstärkungsrings
- 311a: Innendurchmesser des ersten Verstärkungsrings vor der Positionierung der Permanentmagnete
- 311: Innendurchmesser des ersten Verstärkungsrings mit darauf angeordneten druckvorgespannten Permanentmagneten
- 312: Außendurchmesser des ersten Verstärkungsrings
- 32: zweiter Verstärkungsring
- 32i: Innenseite des zweiten Verstärkungsrings
- 32a: Außenseite des zweiten Verstärkungsrings
- 321: Innendurchmesser des zweiten Verstärkungsrings
- 322: Außendurchmesser des zweiten Verstärkungsrings
- 33: aus der Innenseite der Magneteinheit herausragende Vorsprünge
- 4: erste Körper (zumindest magnetisierbar)
- 4': zweite Körper (zumindest magnetisierbar)
- 41, 42: trapezförmige Stirnflächen der quaderförmigen Permanentmagnete
- 43: Seitenflächen der Permanentmagneten
- 43G: rechteckige Grundfläche
- 43D: rechteckige Deckelfläche
- 43S: Seitenkante der Grundfläche und der Deckelfläche (in Wesentlichen) senkrecht zur Stirnfläche
- 44: Adhäsionsschicht
- 4G1: kurze Grundseite der trapezförmigen Stirnfläche
- 4G2: lange Grundseite der trapezförmigen Stirnfläche
- 4L1: Länge der kurzen Grundseite G1
- 4L2: Länge der langen Grundseite G2
- 4R: Anordnung der Permanentmagnete als magnetischer Ring auf dem ersten Verstärkungsring
- 4T: Trapezschenkel
- 4W1: erste Winkel zwischen Trapezschenkel und langer Grundseite
- 4W2: zweiter Winkel zwischen Trapezschenkel und langer Grundseite
- 5: Haltevorrichtung
- 6: Spreizwerkzeug
- 10: Schwungrad
- 10i: Innenseite des Schwungrades
- 11: Schwungrad-Einheit

- AF: Aufbringen einer Adhäsionsschicht
- AP: Aufpressen des zweiten Verstärkungsrings auf den ersten Verstärkungsring
- B: Bereitstellen eines ersten Verstärkungsrings
- D: Differenz zwischen Innendurchmesser des ersten Verstärkungsrings vor und nach der Positionierung der Permanentmagnete mit Druckvorspannung
- DV: Druckvorspannung
- HD: Hineindrücken der herausstehenden Permanentmagnete in Richtung des ersten Verstärkungsring
- L: Lücke zwischen Permanentmagnete und erstem Verstärkungsring
- MA: Magnetisieren der Magneteinheit
- M: Montieren der Magneteinheit auf die Innenseite des Schwungrades
- P: Positionieren der Permanentmagnete auf dem ersten Verstärkungsring
- R: Rotationsachse des Schwungrades
- S: Spalt zwischen Magneteinheit und Stator
- U: umlaufende Richtung, Umlaufrichtung

## Patentansprüche

1. Eine Magneteinheit (3) geeignet als Außenläufer für eine Motor-Generator-Einheit (1) für Schwungräder (10) mit hohen Betriebs-Umdrehungsgeschwindigkeiten umfassend einen ersten dehnfähigen ringförmigen Verstärkungsring (31) mit einer Innenseite (31 i), auf der eine Vielzahl an zumindest magnetisierbaren ersten Körpern (4) im Kontakt zur Innenseite (31 i) und eine Vielzahl an zumindest magnetisierbaren zweiten Körpern (4') so angeordnet sind, dass eine Dehnung des Verstärkungsrings (31) mittels eines oder mehrerer der zwischen den ersten Körpern (4) angeordneten zweiten Körpern (4') mit einer zur Dehnung des Verstärkungsrings (31) geeigneten Form der zweiten Körper (4') bewirkt wird und eine aus der Dehnung des Verstärkungsrings (31) resultierende Druckvorspannung (DV) zwischen ersten und zweiten Körper (4, 4') in umlaufender Richtung (U) zur Innenseite (31 i) besteht, die so angepasst ist, dass diese ein Reißen der ersten und zweiten Körper (4, 4') aufgrund einer bei Betriebs-Umdrehungsgeschwindigkeit des Schwungrades (10) wirkenden Fliehkraft verhindern kann.

2. Die Magneteinheit (3) nach Anspruch 1,
**dadurch gekennzeichnet,**
**dass** benachbarte erste und zweite Körper (4, 4') zumindest segmentweise in direktem Kontakt zueinander auf der Innenseite (31 i) angeordnet sind.

3. Die Magneteinheit (3) nach Anspruch 2,
**dadurch gekennzeichnet,**
**dass** die ersten und zweiten Körper (4, 4') jeweils eine Grundfläche (43G) mit einer langen Grundseite (4G2) in umlaufender Richtung (U) der Innenseite (31 i) gesehen und einer Deckelfläche (43D) mit einer kurzen Grundseiten (4G1) in umlaufender Richtung (U) der Innenseite (31 i) gesehen besitzen, wobei die ersten Körper (4) und die zweiten Körper (4') mit einer gegenteiligen Ausrichtung so nebeneinander angeordnet sind, dass jeweils die Grundfläche (43G) des ersten Körpers (4) und die Deckelfläche (43D) des benachbarten zweiten Körpers (4') der Innenseite (31i) des Verstärkungsring (32) zugewandt sind.

4. Die Magneteinheit (3) nach Anspruch 3,
**dadurch gekennzeichnet,**
**dass** die Längen (4L1, 4L2) der kurzen und langen Grundseiten (4G1, 4G2) der jeweiligen ersten und zweiten Körper (4, 4') auf die gewünschte Druckvorspannung (DV) angepasst sind.

5. Die Magneteinheit (3) nach Anspruch 4,
**dadurch gekennzeichnet,**
**dass** die ersten und zweiten Körper (4, 4') jeweils als Pyramidenstümpfe mit viereckiger Grundfläche (43G) mit zwei gegenüberliegenden trapezförmigen Stirnflächen (41, 42) ausgerichtet im Wesentlichen senkrecht auf der Grundfläche (43G) ausgeführt sind, wobei die Trapezform der Stirnflächen (41, 42) die kurze Grundseite (G1) und die lange Grundseite (4G2) als parallele Grundseiten der Trapezform umfasst, vorzugsweise ist die Grundfläche (43G) rechteckig und die Stirnflächen (41, 42) sind gleichschenklige Trapeze.

6. Die Magneteinheit (3) nach Anspruch 5,
**dadurch gekennzeichnet,**
**dass** die Stirnflächen (41, 42) der zweiten Körper (4') einen ersten Winkel (4W1) zwischen Trapezschenkel (4T) und langer Grundseite (4G2) der Stirnfläche (41, 42) und dass die Stirnflächen (41, 42) der ersten Körper (4) einen zweiten Winkel (4W2) zwischen Trapezschenkel (4T) und langer Grundseite (4G2) der Stirnfläche (41, 42) aufweisen, wobei sich die ersten und zweiten Winkel (4W1, 4W2) unterscheiden.

7. Die Magneteinheit (3) nach Anspruch 6,
**dadurch gekennzeichnet,**
**dass** der zweite Winkel (4W2) größer als der erste Winkel (4W1) ist, vorzugsweise beträgt der zweite Winkel (4W2) 76,5 Grad ± 2 Grad und der erste Winkel (4W1) 82,5 Grad ± 2 Grad.

8. Die Magneteinheit (3) nach einem der Ansprüche 2 bis 7,
**dadurch gekennzeichnet,**
**dass** die ersten und zweiten Körper (4, 4') als magnetischer Ring (4R), der die Innenseite (31 i) des Verstärkungsrings (31) vollständig umläuft, angeordnet sind, vorzugsweise weisen die in Umlaufrichtung (U) der Magneteinheit (3) nebeneinander angeordneten ersten und zweiten Körper (4, 4') eine Magnetisierung gemäß einer Halbach-Anordnung auf.

9. Die Magneteinheit (3) nach einem der voranstehenden Ansprüche,
**dadurch gekennzeichnet,**
**dass** zumindest zwischen einigen der benachbarten ersten und zweiten Körper (4, 4') eine zumindest temporär gleitfähige Adhäsionsschicht (44) angeordnet ist.

10. Die Magneteinheit (3) nach einem der voranstehenden Ansprüche,
**dadurch gekennzeichnet,**
**dass** die Magneteinheit (3) mindestens einen weiteren zweiten Verstärkungsring (32) angeordnet auf der Außenseite (31 a) des ersten Verstärkungsrings (31) umfasst.

11. Eine Schwungradeinheit (11) umfassend ein zumindest teilweise innen hohles Schwungrad (10) mit einer Innenseite (10i) und eine am Schwungrad angeordnete Magneteinheit (2) nach Anspruch 1, die zusammen mit einem Stator (2) eine Motor-Generator-Einheit (1) zum Rotieren des Schwungrades (10) bildet, wobei die Magneteinheit (3) auf der Innenseite (10i) des Schwungrades (10) so montiert ist, dass die ersten und zweiten Körper (4, 4') im Betrieb des Schwungrades den Stator (2) umlaufen.

12. Ein Verfahren zur Herstellung einer Magneteinheit (3) geeignet als Außenläufer für eine Motor-Generator-Einheit (1) für Schwungräder (10) mit hohen Betriebs-Umdrehungsgeschwindigkeiten nach Anspruch 1 umfassend die Schritte
- Bereitstellen (B) eines zur Erzeugung einer gewünschten Druckvorspannung (DV) dehnfähigen ersten Verstärkungsringes (31) mit einer Innenseite (31 i), auf der einer Vielzahl an zumindest magnetisierbaren ersten Körpern (4) im Kontakt zur Innenseite (31 i) angeordnet sind;
- Positionieren (P) von zweiten Körpern (4') zwischen den ersten Körpern (4) so, dass die zweiten Körper (4') in radialer Richtung aus dem ersten Körpern (4) herausragen und dass zwischen zweiten Körpern (4') und der Innenseite (31 i) des Verstärkungsrings (31) eine Lücke (L) verbleibt, wobei die zweiten Körper (4') eine geeignete Form zur Dehnung des Verstärkungsrings (31) aufweisen;
- Hineindrücken (HD) der herausstehenden zweiten Körper (4') mittels eines Spreizwerkzeugs (6) in Richtung der Innenseite (31 i) des Verstärkungsrings (31), bis eine Dehnung des ersten Verstärkungsrings (31) bewirkt wird und eine daraus resultierende Druckvorspannung (DV) zwischen ersten und zweiten Körpern (4, 4') in umlaufender Richtung (U) zur Innenseite (31 i) ausgeübt wird, die so angepasst ist, dass diese ein Reißen der ersten und zweiten Körper (4, 4') aufgrund einer bei Betriebs-Umdrehungsgeschwindigkeit des Schwungrades (10) wirkenden Fliehkraft verhindert.

13. Das Verfahren nach Anspruch 12, wobei der Schritte des Positionierens (P) den Schritt eines Aufbringens (AF) einer zumindest bis Abschluss des Hereindrückens (HD) gleitfähigen Adhäsionsschicht (44) zwischen den ersten und zweiten Körpern (4, 4') umfasst.

14. Das Verfahren nach Anspruch 12 oder 13, umfassend den weiteren Schritt eines Aufpressens (AP) eines zweiten Verstärkungsringes (32) auf die Außenseite (31 a) des ersten Verstärkungsrings (31) zur Verstärkung der Druckvorspannung (DV), wozu der zweite Verstärkungsring (32) einen kleineren Innendurchmesser (321) besitzt als der Außendurchmesser (312) des ersten Verstärkungsrings (31) beträgt, wobei die Differenz dieser Durchmesser (312, 321) auf die gewünschte Druckvorspannung (DV) angepasst ist.

15. Das Verfahren nach einem der Ansprüche 12 bis 14, umfassend den weiteren Schritt des Magnetisierens (MA) der ersten und/oder zweiten Körper (4, 4') nach dem Schritt des Hereindrückens (HD), vorzugsweise wird durch die Magnetisierung (MA) eine Halbach-Anordnung erzeugt.

16. Ein Verfahren zur Herstellung eines Schwungradeinheit (11) nach Anspruch 11 umfassend den Schritt des Montierens (M) einer Magneteinheit (3) nach Anspruch 1 auf der Innenseite (10i) eines zumindest teilweise innen hohlen Schwungrades (10) zur Bildung einer Motor-Generator-Einheit (1) zusammen mit einem Stator (2), so dass die Magneteinheit (3) mit den ersten und zweiten Körpern (4, 4') im Betrieb des Schwungrades (10) den Stator (2) der Motor-Generator-Einheit (1) als Außenläufers umläuft.
